# DEMANDE DE BREVET EUROPEEN

(11) **EP 4 241 978 A1**
(43) Date de publication de la demande: **13.09.2023**
(21) Numéro de dépôt: 23159871.5
(22) Date de dépôt: 03.03.2023
(51) Int. Cl.: B32B 3/12, B32B 5/26, B32B 27/08, B32B 29/00

(54) **STRUCTURE EN NID D'ABEILLES PRÉSENTANT UNE CONDUCTIVITÉ THERMIQUE AMÉLIORÉE**

(30) Priorité: 10.03.2022 FR 2202097
(71) Demandeur: Airbus Operations, 31060 Toulouse (FR)
(72) Inventeur: CALIMAN, Laurent, 31060 TOULOUSE (FR); RAVISE, Florian, 31060 TOULOUSE (FR); BELIN, Michael, 31060 TOULOUSE (FR)
(74) Mandataire: Cabinet Le Guen Maillet

(57) **Abrégé**

L'invention concerne une structure en nid d'abeilles (200) comportant une âme (202) constituée de plusieurs feuilles ondulées (214) qui sont superposées et fixées les unes sur les autres, où lesdites feuilles ondulées (214) sont réalisées dans un matériau thermiquement isolant, où lesdites feuilles ondulées (214) sont imprégnées d'une résine chargée de poudre thermiquement conductrice sur toute leur longueur.

Avec un tel arrangement, une telle structure en nid d'abeilles peut être utilisée même si la température ambiante dépasse certains seuils comme par exemple 120°C.

## Description

### DOMAINE TECHNIQUE

La présente invention se rapporte au domaine général des structures en nid d'abeilles et plus particulièrement aux structures en nid d'abeilles présentant une conductivité thermique améliorée. La présente invention concerne également différents procédés de fabrication d'une telle structure en nid d'abeilles.

### ÉTAT DE LA TECHNIQUE ANTÉRIEURE

Dans différents domaines, il est nécessaire d'atténuer des bruits, comme par exemple pour un moteur d'aéronef. Il est ainsi connu d'utiliser un matériau acoustiquement absorbant disposé autour de la source du bruit afin de l'atténuer.

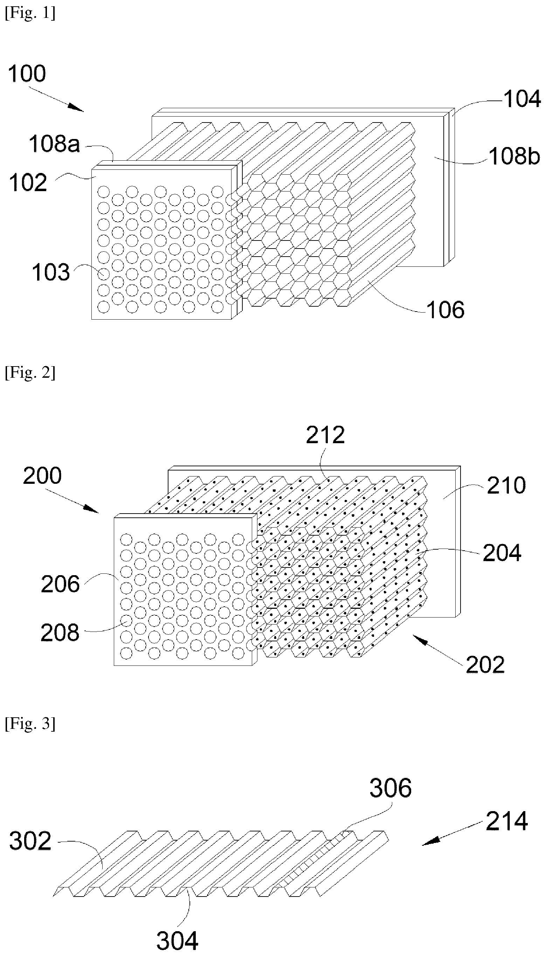

Un matériau acoustiquement absorbant prend par exemple la forme d'une structure en nid d'abeilles 100 telle que représentée à la Fig. 1 et qui comporte une peau résistive 102 percée de trous 103, une peau de fond 104 et des cellules 106 qui sont juxtaposées les unes aux autres et qui sont ici de section hexagonale. Les cellules 106 sont disposées entre la peau résistive 102 et la peau de fond 104.

La peau résistive 102 est orientée vers la source du bruit et les trous 103 permettent aux ondes sonores d'entrer dans les cavités formées par les cellules 106.

Lorsque la température ambiante est supérieure à 120°C, une telle structure en nid d'abeilles 100 doit avoir des capacités de transfert thermique. Dans ces cas, les cellules 106 sont en métal (aluminium) et la structure en nid d'abeilles 100 comporte alors pour chaque peau 102, 104, un pli de verre 108a-b qui est positionné entre les cellules 106 et la peau résistive 102, d'une part, et la peau de fond 104, d'autre part pour assurer une protection anti-corrosion. Bien qu'une telle structure donne de bons résultats, elle est relativement lourde du fait de la présence des cellules en métal et des plis de verre et il est donc nécessaire de trouver une alternative à ce type de structure.

### EXPOSÉ DE L'INVENTION

Un objet de la présente invention est de proposer une structure en nids d'abeilles qui présente une conductivité thermique améliorée.

À cet effet, est proposée une structure en nid d'abeilles comportant une âme constituée de plusieurs feuilles ondulées qui sont superposées et fixées les unes sur les autres, où lesdites feuilles ondulées sont réalisées dans un matériau thermiquement isolant, où lesdites feuilles ondulées sont imprégnées d'une résine chargée de poudre thermiquement conductrice sur toute leur longueur.

Avec un tel arrangement, une telle structure en nid d'abeilles peut être utilisée même si la température ambiante dépasse certains seuils comme par exemple 120°C.

Avantageusement, le matériau thermiquement isolant est un papier aramide. Avantageusement, la poudre thermiquement conductrice est une poudre métallique. L'invention propose également un procédé de fabrication d'une structure en nid d'abeilles selon l'une des variantes précédentes, ledit procédé comportant :
- une étape de fourniture au cours de laquelle une feuille est fournie,
- une étape de conformage au cours de laquelle ladite feuille est conformée sous la forme d'une feuille ondulée,
- une étape d'empilage et de fixation au cours de laquelle ladite feuille ondulée est fixée à une feuille ondulée similaire obtenue au cours d'un cycle précédent,
- une étape de retour à l'étape de fourniture jusqu'à l'obtention d'un empilement du nombre souhaité de feuilles,
- une étape d'imprégnation au cours de laquelle l'empilement de feuilles ainsi obtenu est entièrement imprégné d'une résine phénolique chargée de poudre thermiquement conductrice, et
- une étape de polymérisation au cours de laquelle la résine phénolique est polymérisée.

L'invention propose également un procédé de fabrication d'une structure en nid d'abeilles selon l'une des variantes précédentes, ledit procédé comportant :
- une étape de fourniture au cours de laquelle une feuille est fournie,
- une étape d'imprégnation au cours de laquelle la feuille ainsi fournie est entièrement imprégnée d'une résine thermoplastique chargée de poudre thermiquement conductrice,
- une étape de consolidation au cours de laquelle la feuille ainsi imprégnée est consolidée pour donner une feuille imprégnée,
- une étape de conformage au cours de laquelle ladite feuille imprégnée est conformée sous la forme d'une feuille ondulée,
- une étape d'empilage et de fixation au cours de laquelle ladite feuille ondulée est fixée à une feuille ondulée similaire obtenue au cours d'un cycle précédent,
- une étape de retour à l'étape de fourniture jusqu'à l'obtention d'un empilement du nombre souhaité de feuilles, et
- une étape de polymérisation au cours de laquelle la résine thermoplastique est polymérisée.

L'invention propose également un procédé de fabrication d'une structure en nid d'abeilles selon l'une des variantes précédentes, ledit procédé comportant :
- une étape de fourniture au cours de laquelle une feuille à fixer est fournie,
- une étape d'empilage et de fixation au cours de laquelle ladite feuille à fixer est fixée à une feuille à fixer similaire obtenue au cours d'un cycle précédent,
- une étape de retour à l'étape de fourniture jusqu'à l'obtention d'un empilement du nombre souhaité de feuilles,
- une étape d'étirage au cours de laquelle l'empilement de feuilles ainsi obtenu est étiré parallèlement à la direction d'empilement afin de conformer les feuilles de l'empilement sous forme de feuilles ondulées,
- une étape d'imprégnation au cours de laquelle l'empilement de feuilles ainsi obtenu est entièrement imprégné d'une résine phénolique chargée de poudre thermiquement conductrice, et
- une étape de polymérisation au cours de laquelle la résine phénolique est polymérisée. Avantageusement, le procédé de fabrication comporte avant l'étape d'empilage et de fixation, une étape de dépose de colle au cours de laquelle de la colle est déposée sur des surfaces de fixation des feuilles.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective d'une structure en nid d'abeilles de l'état de la technique,
[Fig. 2] est une vue en perspective d'une structure en nid d'abeilles selon l'invention,
[Fig. 3] est une vue en perspective d'une feuille ondulée constituant une âme de la structure en nid d'abeilles,
[Fig. 4] est une représentation schématique des étapes d'un premier procédé de fabrication de la structure en nid d'abeilles selon l'invention,
[Fig. 5] est une représentation schématique des étapes d'un deuxième procédé de fabrication de la structure en nid d'abeilles selon l'invention, et
[Fig. 6] est une représentation schématique des étapes d'un troisième procédé de fabrication de la structure en nid d'abeilles selon l'invention.

### EXPOSÉ DÉTAILLÉ DE MODES DE RÉALISATION

La Fig. 2 montre une structure en nid d'abeilles 200 selon l'invention et qui comporte une âme 202 constituée de cellules 204 juxtaposées les unes aux autres et de section hexagonale. L'âme 202 est constituée de plusieurs feuilles ondulées 214 qui sont superposées et fixées les unes sur les autres et dont un exemple est représenté à la Fig. 3.

Chaque ondulation présente une section trapézoïdale avec alternativement une première ondulation 302 qui est ouverte au niveau de la grande base du trapèze d'un premier côté de la feuille ondulée 214, ici vers le haut, et une deuxième ondulation 304 qui est ouverte au niveau de la grande base du trapèze d'un deuxième côté de la feuille ondulée 214, ici vers le bas.

Lorsque deux feuilles ondulées 214 sont fixées l'une sur l'autre, elles sont décalées l'une par rapport à l'autre de manière à ce qu'une première ondulation de la feuille ondulée 214 inférieure se trouve en vis-à-vis d'une deuxième ondulation de la feuille ondulée 214 supérieure de manière à réaliser entre les deux feuilles ondulées 214 ainsi fixées les cellules 204 de section hexagonale.

La fixation de deux feuilles ondulées 214 s'effectue le long d'une surface de fixation 306 qui correspond à la petite base du trapèze et qui est également appelée « noeud ». Selon un mode de réalisation, la fixation est un collage des surfaces de fixation 306 entre elles et selon un autre mode de réalisation, la fixation est un soudage des surfaces de fixation 306 entre elles.

Dans le mode de réalisation de l'invention présenté à la Fig. 2, la structure en nid d'abeilles 200 comporte une peau résistive 206 percée de trous 208 et une peau de fond 210 qui sont fixées de part et d'autre de l'âme 202 en bout des cellules 204.

L'âme 202 et les cellules 204 sont ainsi disposées entre la peau résistive 206 et la peau de fond 210.

La peau résistive 206 est destinée à être orientée vers une source de bruit de manière à ce que les ondes sonores pénètrent dans les cellules 106 en traversant les trous 208.

Les cellules 204 et donc les feuilles ondulées 214 sont réalisées dans un matériau thermiquement isolant comme par exemple un papier, c'est-à-dire un élément non tissé et poreux ou un élément tissé, comme par exemple un polyamide aromatique, appelé papier aramide qui peut être non tissé et poreux ou tissé.

Les peaux 206 et 210 peuvent prendre la forme d'un élément thermodurcissable, thermoplastique ou hybride comme dans le cas de l'état de la technique.

Pour améliorer la conductivité thermique de l'âme 202, les feuilles ondulées 214 sont imprégnées d'une résine chargée de poudre thermiquement conductrice comme par exemple de la poudre métallique comme de la poudre d'aluminium ou d'oxyde d'aluminium (appelé alumine), ou comme de la poudre de cuivre ou de bronze. Selon la charge utilisée, la conductivité électrique de l'âme 202 peut également être améliorée. La poudre thermiquement conductrice est représentée par les points 212.

La résine est par exemple une résine phénolique ou thermoplastique.

Chaque feuille ondulée 214 s'étend parallèlement aux ondulations 302 et 304 entre deux extrémités où une première extrémité est solidaire de la peau résistive 206 et une deuxième extrémité est solidaire de la peau de fond 210.

La résine ainsi chargée est imprégnée sur toute la longueur des feuilles ondulées 214 et des cellules 204, c'est-à-dire entre les deux extrémités et les deux peaux 206 et 210. La présence de la charge thermiquement conductrice dans l'âme 202 rend cette dernière thermiquement conductrice et elle peut alors être utilisée pour les applications où la température ambiante dépasse certains seuils comme par exemple 120°C.

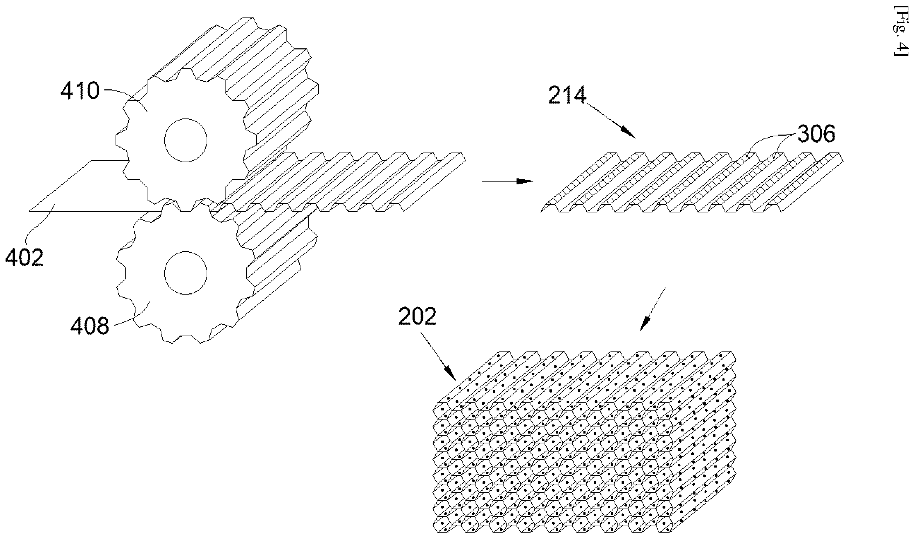

La Fig. 4 montre un premier procédé de fabrication de l'âme 202 dont chaque cellule 204 présente une section hexagonale.

Le premier procédé de fabrication comporte :
- une étape de fourniture au cours de laquelle une feuille 402, en particulier une feuille de papier aramide non tissé et poreux ou tissé, est fournie,
- une étape de conformage au cours de laquelle ladite feuille 402 est conformée sous la forme d'une feuille ondulée 214 comme celle décrite à partir de la Fig. 3, la feuille 402 pouvant être sous forme d'une feuille ou d'un rouleau à découper en sortie du conformage,
- une étape d'empilage et de fixation au cours de laquelle ladite feuille ondulée 214 est fixée à une feuille ondulée 214 similaire obtenue au cours d'un cycle précédent, la fixation s'effectuant par l'intermédiaire des surfaces de fixation 306,
- une étape de retour à l'étape de fourniture jusqu'à l'obtention d'un empilement du nombre souhaité de feuilles,
- une étape d'imprégnation au cours de laquelle l'empilement de feuilles ainsi obtenu est entièrement imprégné d'une résine phénolique chargée de poudre thermiquement conductrice, et
- une étape de polymérisation au cours de laquelle la résine phénolique est polymérisée pour obtenir l'âme 202.

L'étape de conformage s'effectue par exemple en passant la feuille 402 entre deux rouleaux 408 et 410 rotatifs et présentant chacun des empreintes sur sa périphérie. Ainsi lors du passage de la feuille 402 entre les deux rouleaux 408 et 410, les empreintes desdits rouleaux 408 et 410 déforment la feuille 402 pour former les ondulations 302 et 304.

L'étape d'imprégnation s'effectue par exemple en plongeant entièrement l'empilement de feuilles ondulées et fixées dans un bain de résine phénolique chargée et sous forme fluide.

Dans le cas du collage, l'étape de polymérisation permet de polymériser également la colle. L'étape de polymérisation dépend de la résine phénolique et, dans le cas du collage, de la colle utilisée et reprend les caractéristiques préconisées pour ladite résine phénolique et ladite colle, en particulier à une température d'environ 180°C.

Dans le cas du collage, le procédé de fabrication comporte avant l'étape d'empilage et de fixation, une étape de dépose de colle au cours de laquelle de la colle est déposée sur les surfaces de fixation 306 de ladite feuille ondulée 214.

Dans le cas du soudage, ce dernier s'effectue pendant l'étape d'empilage et de fixation.

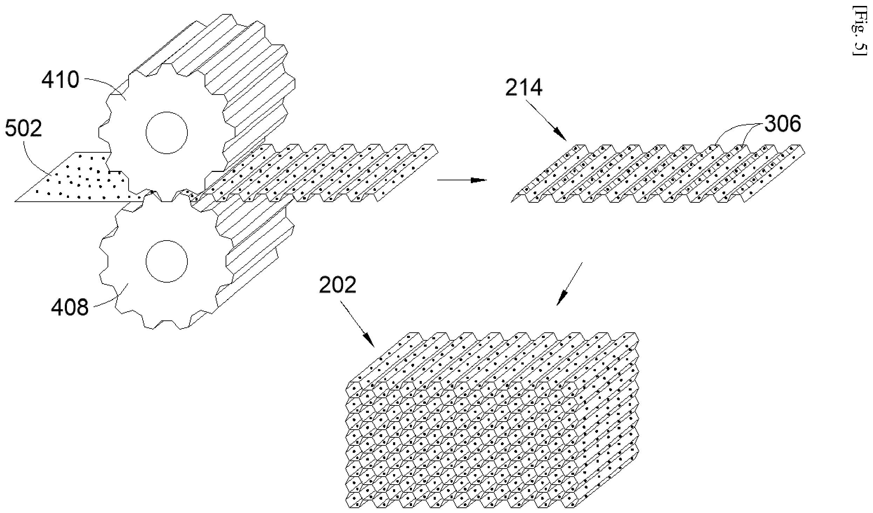

La Fig. 5 montre un deuxième procédé de fabrication de l'âme 202 dont chaque cellule 204 présente une section hexagonale.

Le deuxième procédé de fabrication comporte :
- une étape de fourniture au cours de laquelle une feuille, en particulier une feuille de papier aramide non tissé et poreux ou tissé, est fournie,
- une étape d'imprégnation au cours de laquelle la feuille ainsi fournie est entièrement imprégnée d'une résine thermoplastique chargée de poudre thermiquement conductrice,
- une étape de consolidation au cours de laquelle la feuille ainsi imprégnée est consolidée pour donner une feuille imprégnée 502,
- une étape de conformage au cours de laquelle ladite feuille imprégnée 502 est conformée sous la forme d'une feuille ondulée 214 qui prend la même forme que celle décrite à partir de la Fig. 3 mais où la feuille est imprégnée et consolidée,
- une étape d'empilage et de fixation au cours de laquelle ladite feuille ondulée 214 est fixée à une feuille ondulée 214 similaire obtenue au cours d'un cycle précédent, la fixation s'effectuant par l'intermédiaire des surfaces de fixation 306,
- une étape de retour à l'étape de fourniture jusqu'à l'obtention d'un empilement du nombre souhaité de feuilles, et
- une étape de polymérisation au cours de laquelle la résine thermoplastique est polymérisée pour obtenir l'âme 202, en particulier à une température d'environ 180°C.

L'étape d'imprégnation s'effectue par exemple en plongeant entièrement la feuille dans un bain de résine thermoplastique chargée et sous forme fluide.

L'étape de consolidation consiste en une polymérisation de la résine thermoplastique en particulier à une température inférieure à 400°C.

L'étape de conformage s'effectue par exemple en passant la feuille imprégnée 502 entre deux rouleaux 408 et 410 rotatifs et présentant chacun des empreintes sur sa périphérie. Ainsi lors du passage de la feuille imprégnée 502 entre les deux rouleaux 408 et 410, les empreintes desdits rouleaux 408 et 410 déforment la feuille imprégnée 502 pour former les ondulations 302 et 304. Une montée en température de la feuille imprégnée et consolidée pour la ramollir lors de l'étape de conformage facilite la réalisation des ondulations.

Dans le cas du collage, l'étape de polymérisation permet de polymériser également la colle. L'étape de polymérisation dépend de la résine thermoplastique et, dans le cas du collage, de la colle utilisée et reprend les caractéristiques préconisées pour ladite résine thermoplastique et ladite colle.

Dans le cas du collage, le procédé de fabrication comporte avant l'étape d'empilage et de fixation, une étape de dépose de colle au cours de laquelle de la colle est déposée sur les surfaces de fixation 306 de ladite feuille ondulée 214.

Dans le cas du soudage, ce dernier s'effectue pendant l'étape d'empilage et de fixation.

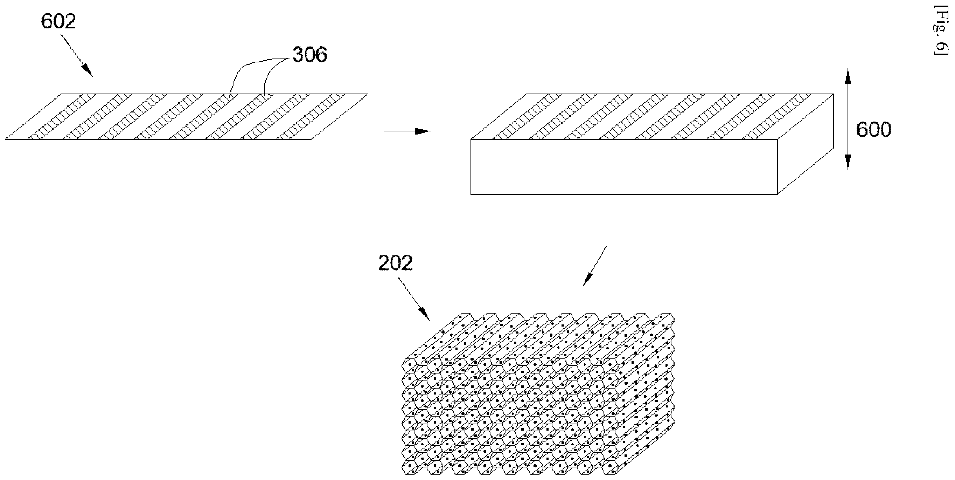

La Fig. 6 montre un troisième procédé de fabrication de l'âme 202 dont chaque cellule 204 présente une section hexagonale.

Le troisième procédé de fabrication comporte :
- une étape de fourniture au cours de laquelle une feuille à fixer 602, en particulier une feuille de papier aramide non tissé et poreux ou tissé, est fournie, la feuille à fixer 602 pouvant être sous forme d'une feuille ou d'un rouleau à découper en sortie de l'étape de fourniture,
- une étape d'empilage et de fixation au cours de laquelle ladite feuille à fixer 602 est fixée à une feuille à fixer 602 similaire obtenue au cours d'un cycle précédent, la fixation s'effectuant par l'intermédiaire des surfaces de fixation 306,
- une étape de retour à l'étape de fourniture jusqu'à l'obtention d'un empilement du nombre souhaité de feuilles,
- une étape d'étirage au cours de laquelle l'empilement de feuilles ainsi obtenu est étiré (double flèche 604) parallèlement à la direction d'empilement afin de conformer les feuilles de l'empilement sous forme de feuilles ondulées 214 comme celle décrite à partir de la Fig. 3,
- une étape d'imprégnation au cours de laquelle l'empilement de feuilles ainsi obtenu est entièrement imprégné d'une résine phénolique chargée de poudre thermiquement conductrice, et
- une étape de polymérisation au cours de laquelle la résine phénolique est polymérisée pour obtenir l'âme 202, en particulier à une température d'environ 180°C.

L'étape d'imprégnation s'effectue par exemple en plongeant entièrement les feuilles ondulées et fixées dans un bain de résine phénolique chargée et sous forme fluide.

Dans le cas du collage, l'étape de polymérisation permet de polymériser également la colle. L'étape de polymérisation dépend de la résine phénolique et, dans le cas du collage, de la colle utilisée et reprend les caractéristiques préconisées pour ladite résine phénolique et ladite colle.

Dans le cas du collage, le procédé de fabrication comporte avant l'étape d'empilage et de fixation, une étape de dépose de colle au cours de laquelle de la colle est déposée sur les surfaces de fixation 306 de ladite feuille à fixer 602.

Dans le cas du soudage, ce dernier s'effectue pendant l'étape d'empilage et de fixation. Après réalisation de l'âme 202, les peaux 206 et 210 sont fixées aux extrémités des cellules 204 par tous moyens connus de l'homme du métier comme par exemple par collage.

## Revendications

1. Structure en nid d'abeilles (200) comportant une âme (202) constituée de plusieurs feuilles ondulées (214) qui sont superposées et fixées les unes sur les autres, où lesdites feuilles ondulées (214) sont réalisées dans un matériau thermiquement isolant, où lesdites feuilles ondulées (214) sont imprégnées d'une résine chargée de poudre thermiquement conductrice sur toute leur longueur.

2. Structure en nid d'abeilles (200) selon la revendication 1, **caractérisée en ce que** le matériau thermiquement isolant est un papier aramide.

3. Structure en nid d'abeilles (200) selon l'une des revendications 1 ou 2, **caractérisée en ce que** la poudre thermiquement conductrice est une poudre métallique.

4. Procédé de fabrication d'une structure en nid d'abeilles (200) selon l'une des revendications 1 à 3, ledit procédé comportant :
- une étape de fourniture au cours de laquelle une feuille (402) est fournie,
- une étape de conformage au cours de laquelle ladite feuille (402) est conformée sous la forme d'une feuille ondulée (214),
- une étape d'empilage et de fixation au cours de laquelle ladite feuille ondulée (214) est fixée à une feuille ondulée (214) similaire obtenue au cours d'un cycle précédent,
- une étape de retour à l'étape de fourniture jusqu'à l'obtention d'un empilement du nombre souhaité de feuilles,
- une étape d'imprégnation au cours de laquelle l'empilement de feuilles ainsi obtenu est entièrement imprégné d'une résine phénolique chargée de poudre thermiquement conductrice, et
- une étape de polymérisation au cours de laquelle la résine phénolique est polymérisée.

5. Procédé de fabrication d'une structure en nid d'abeilles (200) selon l'une des revendications 1 à 3, ledit procédé comportant :
- une étape de fourniture au cours de laquelle une feuille est fournie,
- une étape d'imprégnation au cours de laquelle la feuille ainsi fournie est entièrement imprégnée d'une résine thermoplastique chargée de poudre thermiquement conductrice,
- une étape de consolidation au cours de laquelle la feuille ainsi imprégnée est consolidée pour donner une feuille imprégnée (502),
- une étape de conformage au cours de laquelle ladite feuille imprégnée (502) est conformée sous la forme d'une feuille ondulée (214),
- une étape d'empilage et de fixation au cours de laquelle ladite feuille ondulée (214) est fixée à une feuille ondulée (214) similaire obtenue au cours d'un cycle précédent,
- une étape de retour à l'étape de fourniture jusqu'à l'obtention d'un empilement du nombre souhaité de feuilles, et
- une étape de polymérisation au cours de laquelle la résine thermoplastique est polymérisée.

6. Procédé de fabrication d'une structure en nid d'abeilles (200) selon l'une des revendications 1 à 3, ledit procédé comportant :
- une étape de fourniture au cours de laquelle une feuille à fixer (602) est fournie,
- une étape d'empilage et de fixation au cours de laquelle ladite feuille à fixer (602) est fixée à une feuille à fixer (602) similaire obtenue au cours d'un cycle précédent,
- une étape de retour à l'étape de fourniture jusqu'à l'obtention d'un empilement du nombre souhaité de feuilles,
- une étape d'étirage au cours de laquelle l'empilement de feuilles ainsi obtenu est étiré parallèlement à la direction d'empilement afin de conformer les feuilles de l'empilement sous forme de feuilles ondulées (214),
- une étape d'imprégnation au cours de laquelle l'empilement de feuilles ainsi obtenu est entièrement imprégné d'une résine phénolique chargée de poudre thermiquement conductrice, et
- une étape de polymérisation au cours de laquelle la résine phénolique est polymérisée.

7. Procédé de fabrication selon l'une des revendications 4 à 6, **caractérisé en ce qu'**il comporte avant l'étape d'empilage et de fixation, une étape de dépose de colle au cours de laquelle de la colle est déposée sur des surfaces de fixation (306) des feuilles.
